(19) **Europäisches Patentamt**
**European Patent Office**
**Office européen des brevets**

(11) **EP 2 259 869 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(21) Anmeldenummer: **09726126.7**

(22) Anmeldetag: **26.03.2009**

(51) Int Cl.:
**B01J 19/00** *(2006.01)*     **C08J 9/30** *(2006.01)*

(86) Internationale Anmeldenummer:
**PCT/EP2009/053575**

(87) Internationale Veröffentlichungsnummer:
**WO 2009/118373 (01.10.2009 Gazette 2009/40)**

(54) **POLYMERSCHÄUME**

POLYMER FOAMS

MOUSSES DE POLYMÈRES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.03.2008 EP 08153412**

(43) Veröffentlichungstag der Anmeldung:
**15.12.2010 Patentblatt 2010/50**

(73) Patentinhaber:
• **BASF SE**
  **67056 Ludwigshafen (DE)**
• **Universite Of Paris 7**
  **75251 Paris Cedex 05 (FR)**

(72) Erfinder:
• **RANFT, Meik**
  **64625 Bensheim-Hochstädten (DE)**
• **ALTEHELD, Armin**
  **55543 Bad Kreuznach (DE)**

• **GUERIN MOREIRA, Andre**
  **67063 Ludwigshafen (DE)**
• **DRENCKHAN, Wiebke**
  **F-91405 Orsay (FR)**
• **VAN DER NET, Antje**
  **Dublin 2 (IE)**
• **GRYSON, Alexander**
  **F-91405 Orsay (FR)**
• **ELIAS, Florence**
  **F-75205 Paris (FR)**

(74) Vertreter: **Féaux de Lacroix, Stefan**
  **Isenbruck Bösl Hörschler LLP**
  **Patentanwälte**
  **Grafenberger Allee 342**
  **40235 Düsseldorf (DE)**

(56) Entgegenhaltungen:
  **WO-A-97/17397     WO-A-03/045541**
  **WO-A-2006/039568**

**Beschreibung**

Die Erfindung betrifft ein verbessertes Verfahren zur Herstellung geordneter Polymerschäume aus Emulgatorschaum-Vorläufern mit mikrofluidischen Verfahren und entsprechend hergestellte Polymerschäume sowie ihre Verwendung.

Polymerschäume werden vielfältig eingesetzt, beispielsweise zur thermischen Isolation, zur mechanischen Dämpfung, zur Schallabsorption, als Verpackungsmaterialien oder beispielsweise als wasserabsorbierende, vernetzte Polymerisate als Superabsorber. Aus WO 97/17397 sind wasserabsorbierende, schaumförmige, vernetzte Polymerisate bekannt, die erhältlich sind durch Schäumen einer polymerisierbaren Mischung, die u. a. monoethylenisch ungesättigte Monomere enthält, wobei das Schäumen durch Dispergieren von feinen Blasen eines inerten Gases erfolgt und Polymerisieren der geschäumten Mischung unter Bildung eines schaumförmigen Hydrogels. Die Herstellung des Schaums erfolgt dabei getrennt von der Polymerisation, wobei die Herstellung beispielsweise in technischen Apparaten durchgeführt werden kann, die für die Herstellung von Harnstoff-Formaldehyd-Schäumen bekannt sind oder im einfachen Fall in einer konventionellen Küchenmaschine, die mit Schneebesen bestückt ist. Aus WO 00/52087 ist bekannt, zum Schäumen einer polymerisierbaren, wässrigen Mischung zunächst ein inertes Gas in der polymerisierbaren, wässrigen Mischung zu bilden und sie anschließend auf Atmosphärendruck zu entspannen. Aus WO 99/44648 ist bekannt, die zur Herstellung eines Schaumes verwendeten monoethylenisch ungesättigten Monomeren mit Alkanolaminen zu neutralisieren.

Die WO 03/045541A beschreibt ein Verfahren zur Herstellung von monomodalen Schäumen, in dem ein erstes Fluid mit einem zweiten Fluid unter mikrofluidischen Verfahrensbedingungen kontaktiert und verschäumt wird. Die Herstellung von Polymerschäumen auf Basis von monoethylenisch ungesättigten Monomeren wird nicht erwähnt.

Die Herstellung eines Polymerschaums mit definierter chemischer Zusammensetzung ist nach diesen Verfahren zwar möglich. Es besteht aber ein Bedarf, die gezielte Steuerung der Morphologie von Schäumen zu verbessern.

Es ist bereits bekannt, zur Herstellung von Mikropartikeln mikrofluidische Verfahren einzusetzen. Mirkofluidische Verfahren sind grundsätzlich bereits beschrieben in G. M. Whiteside, The Origins and the Future of Microfluidics, Nature 442, 368-372 (2006); M. Hashimoto, P. Garstecki, and G.M. Whitesides, Synthesis of Composite Emulsions and Complex Foams with the use of Microfluidic Flow-Focusing Devices, small 3 (10), 1792-1802 (2007); J.D. Tice, H. Song, A.D. Lyon, and R.F. Ismagilov, Formation of Droplets and Mixing in Multiphase Microfluidics at Low Values of the Reynolds and the Capillary Numbers, Langmuir 19, 9127- 9133 (2003); A.M. Ganan-Calvo and J.M. Gordillo, Perfectly Monodisperse Microbubbling by Capillary Flow Focusing, Phys. Rev. Lett. 87 (27), 274501-1 - 274501-4 (2001); S.L. Anna, N. Bontoux, and H.A. Stone, Formation of dispersions using "flow focusing" in microchannels, Appl. Phys. Lett. 82 (3), 364-366 (2003).

Mikrofluidische Verfahren und die hierbei verwendeten mikroverfahrenstechnischen Bauteile zeichnen sich durch folgende Charakteristika aus: kleine charakteristische Längen im Sub-millimeterbereich (wenige bis einige hundert Mikrometer), z. B. von 10 bis 1000 Mikrometer, insbesondere von 100 bis 750 Mikrometer, mit kleinen Volumina (im Bereich von 1 Nano- bis 1 Femtoliter) der erzeugten Bläschen, die ein hohes Oberflächen-zu-Volumen-Verhältnis bedingen, von vorzugsweise mindestens 1000 $m^2/m^3$ und außerdem extrem kleine Reynoldszahlen von kleiner als 1000, insbesondere zwischen 1 und 1000, bevorzugt zwischen 1 und 250, insbesondere zwischen 1 und 100. Dieses hat rein laminare Strömungen zur Folge, so dass die Mischung von chemischen Lösungen auf rein diffuse Vorgänge (anstelle von kinetischen) beschränkt ist. Verweilzeiten von Substanzen in mikrofluidischen Geräten sind im Allgemeinen sehr kurz (Bruchteile von Sekunden), können jedoch beliebig dem Reaktionszweck angepasst werden.

Es ist bereits bekannt, monodisperse Partikel definierter Größe und Morphologie mit mikrofluidischen Verfahren herzustellen, siehe z. B. W. Jeong, J. Kim, S. Kim, S. Lee, G. Mensing, and D.J. Beebe, Hydrodynamic microfabrication via "on the fly" photopolymerization of microscale fibers and tubes, Lab Chip 4, 576-580 (2004); V. Hessel, C. Serra, H. Löwe und G. Hadziioannou, Polymerisationen in mikrostrukturierten Reaktoren: Ein Überblick, Chem. Ing. Tech. 77 (11), 1693-1714 (2005); S. Xu, Z. Nie, M. Seo, P. Lewis, E. Kumacheva, H.A. Stone, P. Garstecki, D.B. Weibel, I. Gitlin, and G.M. Whitesides, Generation of Monodisperse Particles by Using Microfluidics: Control over Size, Shape, and Composition, Angew. Chem. 117, 734-738 (2005); Z. Nie, S. Xu, M. Seo, P.C. Lewis, and E. Kumacheva, Polymer Particles with Various Shapes and Morphologies Produced in Continuous Microfluidic Reactors, J. Am. Chem. Soc. 127, 8058-8063 (2005); M. Seo, Z. Nie, S. Xu, M. Mok, P.C. Lewis, R. Graham, and E. Kumacheva, Continuous Microfluidic Reactors for Polymer Particles, Langmuir 21, 11614-11622 (2005); S. Abraham, E.H. Jeong, T. Arakawa, S. Shoji, K.C. Kim, I. Kim, and J.S. Go, Microfluidics assisted synthesis of well-defined spherical polymeric microcapsules and their utilization as potential encapsulants, Lab Chip 6, 752-756 (2006); H. Zhang, E. Tumarkin, R. Peerani, Z. Nie, R.M.A. Sullan, G.C. Walker, and E. Kumacheva, Microfluidic Production of Biopolymer Microcapsules with Controlled Morphology, J. Am. Chem. Soc. 128, 12205-12210 (2006); J.L. Steinbacher et al., Rapid Self-Assembly of Core-Shell Organosilicon Microcapsules within a Microfluidic Device, J. Am. Chem. Soc. 128, 9442-9447 (2006); J.-W. Kim, A.S. Utada, A. Fernandez-Nieves, Z. Hu, and D.A. Weitz, Fabrication of Monodisperse Gel Shells and Functional Microgels in Microfluidic Devices, Angew. Chem. 119, 1851-1854 (2007); C. SERRA, N. Berton, M. Bouquey, L. Prat, and G. Hadziioannou, A Predictive Approach of the Influence of the Operating Parameters on the Size of Polymer Particles Synthesized in a Simplified Microfluidic System, Langmuir 23, 7745-7750 (2007).

Aus US 2007/0054119 A1 ist bereits bekannt, mikrofluidische Systeme und Techniken zur Herstellung monodisperser Partikel zu verwenden, welche Metall und/oder Nylon enthalten, wobei ein Polymervorläufer in einen mikrofluidischen Kanal unter Bildung der Partikel geführt wird und in dem Kanal gehärtet wird.

Aus WO 2005/103106 A1 ist weiterhin bekannt, Polymerpartikel definierter Gestalt und Morphologie durch Injektion unterschiedlicher Fluide in einen mikrofluidischen Kanal und Härtung herzustellen.

Der Erfindung lag die Aufgabe zugrunde, verbesserte Polymerschäume mit definierter Struktur und Morphologie sowie insbesondere Verfahren zu ihrer Herstellung zur Verfügung zu stellen.

Die Erfindung betrifft ein Verfahren zur Herstellung von Polymerschäumen durch

1. Inkontaktbringen einer Lösung L1 enthaltend mindestens eine polymerisierbare Verbindung, welche ein monoethylenisch ungesättigtes Monomer ist, und ein Lösungsmittel L sowie gegebenenfalls mindestens einer Lösung L2 enthaltend eine polymerisierbare Verbindung und ein Lösungsmittel, welches gleich oder ungleich dem Lösungsmittel aus L1 sein kann mit

2. einem oder mehreren in den verwendeten Lösungsmitteln nicht oder nur teilweise lösbarem Gas G, wobei wenigstens eine der Lösungen einen Emulgator oder einen anderen Hilfsstoff enthält, unter Bildung eines Schaumes durch Ausbildung von Stegen und/oder Wänden durch die Lösungen, welche das Gas G als Blasen einschließen und

3. Polymerisation in einer anschließenden Verfahrensstufe, dadurch gekennzeichnet, dass die Lösungen sowie das Gas G unter mikrofluidischen Verfahrensbedingungen unter Ausbildung von Blasen des Gases G in Kontakt gebracht werden.

In einer bevorzugten Ausführungsform werden die Lösungen sowie das Gas G in einem Kanal K eines Mikroreaktors in Kontakt gebracht, wobei sich das Gas G und die Lösungen in eine gemeinsame Flussrichtung im Kanal K bewegen.

In einer bevorzugten Ausführungsform ist das Gas G vor dem portionsweisen Austreten aus dem Austrittskanal K vollständig von der polymerisierbaren Verbindung umgeben. Dies kann zusätzlich durch das Voransetzen eines Mischkanals MK gewährleistet werden. Der Austrittskanal K hat vorzugsweise einen Durchmesser von einigen Mikrometern bis zu einigen hundert Mikrometern und eine Länge, die einem Vielfachen des gewählten Durchmessers entspricht. Die Wahl des Kanaldurchmessers beeinflusst die Größe der erzeugten Blasen des Gases G, während eine ausreichend gewählte Kanallänge die Monomodalität der Blasen und zusätzlich eine ausreichende Durchmischung der chemischen Substanzen gewährleistet. Der Durchmesser des Mischkanals MK (wenn vorhanden) sollte um ein vielfaches größer als der Austrittskanal sein.

Unter Polymerisationen werden im Rahmen dieser Erfindung Verfahren verstanden, die zur Bildung von Makromolekülen geeignet sind durch Polymerisationen ungesättigter Monomerer unter Auflösung der Doppelbindung und Bildung langer Ketten der polymerisierten Monomere.

Unter Polymeren werden die bei der Polymerisation erhaltenen hochmolekularen Verbindungen verstanden, unter Monomeren die entsprechenden niedermolekularen Ausgangsverbindungen.

Mikrofluidische Verfahrensbedingungen sind insbesondere durch folgende Parameter gekennzeichnet:

1. eine kleine charakteristische Länge des Mischkanals MK (wenn vorhanden) und einem kleinen Durchmesser des Austrittskanals K (vorzugsweise 10 Mikrometer bis 1000 Mikrometer, insbesondere 100 Mikrometer bis 750 Mikrometer), so dass Diffusionsprozesse zu einer ausreichenden Durchmischung der chemischen Substanzen führen können.

2. ein kleines internes Volumen, im Allgemeinen in der Größenordnung von 1 Kubikmillimeter bis 1 Kubikzentimeter;

3. Zusammenführen der Ausgangsstoffe im Reaktor durch Fokussieren der Ströme, bei dem Gas G und Lösungen L durch den engen Austrittskanal K austreten, dessen Durchmesser einigen Mikrometern bis zu einigen hundert Mikrometern und dessen Länge dem Vielfachen des Durchmessers entspricht.

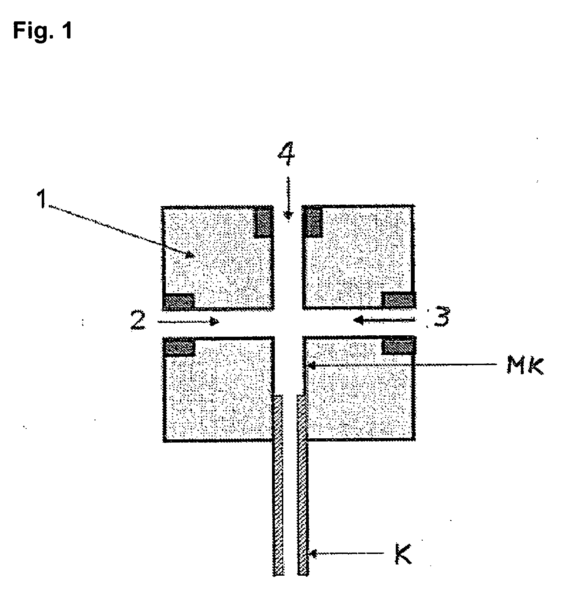

In einer Ausführungsform der Erfindung wird das Verfahren in einem Reaktor geführt, der getrennte Zuleitungen für die Lösungen L und das Gas G aufweist sowie einen Austrittskanal K. Die Figur 1 zeigt einen entsprechenden Reaktor aus einem Block 1 mit den Zufuhren 2 und 3 für die Lösungen L und die Zufuhr 4 für das Gas G, einem Mischkanal MK für die Lösungen und das Gas G sowie den Austrittskanal K.

Selbstverständlich ist es möglich, zur Herstellung größerer Umsätze derartige Reaktoren parallel zu schalten oder zu einem Bündelreaktor zusammenzufassen.

Die Erfindung betrifft weiterhin nach dem erfindungsgemäßen Verfahren herstellbare Polymerschäume, die durch mindestens einen der folgenden Parameter gekennzeichnet sind:

1. Die Größe der Gasblasen liegt im Bereich von einigen Mikrometern (z. B. 10 $\mu$m) bis einigen Millimetern (z. B. 2 mm). Dies eignet sich vor allen Dingen für die Erzeugung von monomodalen Schäumen mit einer äußerst geringen Polydispersität (2-5%).

2. Die Polymerschaumdichte ist exakt (im Rahmen der Ungenauigkeiten der Geräte) durch die Flussraten des Gases G und der Lösungen L festgelegt und kann daher beliebig gewählt werden und beträgt z. B. von $10^{-5}$ bis $10^2$ g/cm$^3$, insbesondere $5 \times 10^{-3}$ bis 1 g/cm$^3$.

3. Da der Polymerisierung ein je nach Schaumstabilität zeitlich ausdehnbares Stadium vorangeht, in dem die kontinuierliche Phase flüssig und niedrigviskos ist, können sich die Gasblasen in ihrer physikalischen Gleichgewichtsstruktur anordnen. Vor allen Dingen monomodale Schäume mit hohem Flüssigkeitsgehalt bilden dann geordnete Schaumstrukturen (dichte "Kugelpackung"). Diesen kann nachträglich (und vor der Polymerisation) durch angelegten Unterdruck Flüssigkeit entzogen werden, um die Schaumdichte zusätzlich zu reduzieren.

In einer Ausführungsform werden polymerisierbare, wässrige Mischungen I verwendet, die folgende Komponenten enthalten:

(A) monoethylenisch ungesättigte Monomere,
(B) Vernetzer,
(C) Initiator,
(D) Emulgator,
(G) Gas
(L) Lösungsmittel

(I-A) Monomere für die polymerisierbaren wässrigen Mischungen

Erfindungsgemäß wird eine polymerisierbare wässrige Mischung mit einer Mikrofluidik-Einheit zu einem Schaum verarbeitet, der verarbeitungsstabil ist und beliebig geformt werden kann. Die polymerisierbare wässrige Mischung enthält als Komponenten (A) beispielsweise monoethylenisch ungesättigte Monomere aus linearen oder verzweigten Carbonsäuren oder deren Anhydride oder Carbonsäureamide oder Carbonsäureester aus linearen oder verzweigten Alkanolen oder monoethylenisch ungesättigte Alkyl- oder Arylsulfonsäuren.

Verwendet werden können monoethylenisch ungesättigte Carbonsäuren wie beispielsweise Acrylsäure, Methacrylsäure, Ethacrylsäure, $\alpha$-Chloracrylsäure, Crotonsäure, Fumarsäure, Maleinsäure, Maleinsäureanhydrid, Mesaconsäure, Glutaconsäure, Aconitsäure, Itaconsäure und Itaconsäureanhydrid, Citraconsäure und Acylamidoglykolsäure. Auch ethylenisch ungesättigte Alkyl- oder Arylsulfonsäuren, wie Vinylsulfonsäure, Allylsulfonsäure, Methallylsulfonsäure, Sulfoethylacrylat, Sulfoethylmethactylat, Sulfopropylacrylat, Sulfopropylmethacrylat, Vinylbenzolsulfonsäure, Acylamidoethansulfonsäure, 2-Acrylamido-2-methylpropansulfonsäure, 2-Sulfoethylacrylat, 2-Sulfoethylmethacrylat, 3-Sulfopropylacrylat, 3-Sulfopropylmethacrylat, 2-Hydroxy-3-acryloxypropylsulfonsäure, 2-Hydroxy-3-methacryloxypropylsulfonsäure Vinylphosphonsäure, Allylphosphonsäure sind geeignet.

Als Monomere der Gruppe (I-A) kommen außerdem Carbonsäureamide oder Carbonsäureester oder Nitrile der oben aufgeführten monoethylenisch ungesättigte Carbonsäuren in Betracht. Insbesondere die Carbonsäureester mit linearen oder verzweigten Alkanolen, beispielsweise Methyl-, Ethyl-, n-Propyl, n-Butyl, iso-Butyl, n-Pentyl, n-Hexyl, 2-Ethylhexly oder cyclischen $C_5$- bis $C_{10}$-Cycloalkylgruppen, wie dem Cyclopentyl- oder Cyclohexyl-Rest. Weiterhin Carbonsäureamide, wie beispielsweise Acrylamid, Methacrylamid, oder Nitrile, wie Acrylnitril sowie $C_4$ bis $C_8$ konjugierte Diene, wie 1,3-Butadien und Isopren.

Weiterhin kommen Monomere in Betracht, die mindestens eine Hydroxy-, Keto- und/oder Silan-Gruppe in der Seitenkette aufweisen. Es kommen insbesondere Hydroxyethyl(meth)acylat, Hydroxypropyl(meth)acrylat, Polyethylenoxid(meth)acrylat, Acetoacetoxymethacrylat und Polyvinylalkohol in Betracht. Ihre Wasserlöslichkeit liegt üblicherweise bei 25°C oberhalb von 100g/1000 cm$^3$ Wasser. Ferner sind Glycidyl(meth)acrylat, Acetacetoxymethacylat, Ureidoethylmethacrylat, Acrylamidoethylethylenharnstoff, N,N'-Bis(Acrylamidoethyl)ethylenharnstoff zu nennen.

Ebenso können Silanen, die olefinische Doppelbindungen enthalten einpolymerisiert werden beispielsweise Vinylsilane oder Methacryloxyalkylsilane. Weiterhin können Silangruppen nach EP-A-0 640 629 durch Polymerisation in Gegenwart von Epoxysilanen, beispielsweise Glycidyloxypropyltrimethoxysilan, oder nach EP-A-0 327 376 durch Polymerisation in Gegenwart von Mercaptoalkyltrisalkoxysilan eingeführt werden. Verbindungen, die über N-Methylolgruppen verfügen, können ebenfalls als Monomere eingesetzt werden. Beispiele für solche Verbindungen sind das N-Methylolacrylamid und das N-Methylolmethacrylamid.

Die Monomeren können allein oder in Mischung untereinander bei der Herstellung der Schäume eingesetzt werden. Zusätzlich wird Wasser zu der Mischung gegeben.

Die Mischungen sind gegebenenfalls neutralisiert. Zur Neutralisation verwendet man beispielsweise Alkalimetallbasen oder Ammoniak oder Amine. Zur Neutralisation setzt man vorzugsweise Natronlauge oder Kalilauge oder N,N,N',N'-Tetramethylethylendiamin ein. Die Neutralisation kann jedoch auch mit Hilfe von Natriumcarbonat, Natriumhydrogencarbonat, Calciumoxid, Calciumhydroxid, Kaliumcarbonat oder Kaliumhydrogencarbonat oder anderen Carbonaten, Hydrogencarbonaten vorgenommen werden.

(I-B) Vernetzer für die polymerisierbaren wässrigen Mischungen

Als Vernetzter für die polymerisierbare wässrige Mischung kommen Monomere in Frage, die mindestens 2 ethylenisch ungesättigte Doppelbindungen aufweisen. Beispiele für solche Monomere, sind N,N'-Methylenbisacrylamid, Polyethylenglykoldiacrylate und Polyethylenglykoldimethacrylate, Trimethylolpropantriacrylat, Trimethylolpropantrimethacrylat, Ethylenglykoldiacrylat, Propylenglykoldiacrylat, Ethylenglykoldimethacrylat, Propylenglykoldimethacrylat, Butandioldiacrylat, Hexandioldiacrylat, Hexandioldimethacrylat, Allylmethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether von Polyethylenglykolen eines Molekulargewichts von 106 bis 4000, Trimethylolpropandiallylether, Butandioldivinylether, Pentaerythrittriallylether und/oder Divinylethylenharnstoff. Vorzugsweise setzt man wasserlösliche Vernetzer ein, z.B. N,N'-Methylenbisacrylamid, Polyethylenglykoldiacrylate und Polyethylenglykoldimethacrylate, die sich von Additionsprodukten von 2 bis 400 Mol Ethylenoxid an 1 Mol eines Diols oder Polyols ableiten, Vinylether von Additionsprodukten von 2 bis 400 Mol Ethylenoxid an 1 Mol eines Diols oder Polyols, Ethylenglykoldiacrylat, Ethylenglykoldimethacrylat oder Triacrylate und Trimethacrylate von Additionsprodukten von 6 bis 20 Mol Ethylenoxid an ein Mol Glycerin, Pentaerythrittriallylether und/oder Divinylharnstoff.

Als Vernetzer kommen außerdem Verbindungen in Betracht, die mindestens eine polymerisierbare ethylenisch ungesättigte Gruppe und mindestens eine weitere funktionelle Gruppe enthalten. Die funktionelle Gruppe dieser Vernetzer muss in der Lage sein, mit den funktionellen Gruppen, im Wesentlichen den Carboxylgruppen oder Sulfonsäuregruppen der Monomeren (I-A) zu reagieren. Geeignete funktionelle Gruppen sind beispielsweise Hydroxyl-, Amino-, Epoxi- und Aziridinogruppen.

Als Vernetzer kommen außerdem solche Verbindungen in Betracht, die mindestens zwei funktionelle Gruppen tragen, die mit Carboxyl- und Sulfonsäuregruppen der eingesetzten Monomeren der Gruppe (I-A) reagieren können. Die geeigneten funktionellen Gruppen wurden bereits oben genannt, d.h. Hydroxyl-, Amino-, Epoxi-, Isocyanat-, Ester-, Amide- und Aziridinogruppen. Beispiele für solche Vernetzer sind Ethylenglykol, Diethylenglykol, Triethylenglykol, Tetraethylenglykol, Polyethylenglykol, Glycerin, Polyglycerin, Propylenglykol, Polypropylenglykol, Blockcopolymerisate aus Ethylenoxid und Propylenoxid, Sorbitanfettsäureester, ethoxylierte Sorbitanfettsäureester, Trimethylolpropan, Pentaerythrit, 1,3-Butandiol, 1,4-Butandiol, Polyvinylalkohol, Sorbit, Polyglycidylether wie Ethylenglykoldiglycidylether, Polyethylenglykoldiglycidylether, Glycerindiglycidylether, Glycerinpolyglycidylether, Diglycerinpolyglycidylether, Polyglycerinpolyglycidylether, Sorbitpolyglycidylether, Pentaetythritpolyglycidylether, Propylenglykoldiglycidylether und Polypropylenglykoldiglycidylether, Polyaziridinverbindungen wie 2,2-Bishydroxymethylbutanoltris[3-(1-aziridinyl)propionat), 1,6-Hexamethylendiethylenharnstoff, Diphenylmethan-bis-4,4'-N,N'-diethylenharnstoff, Halogenepoxyverbindungen wie Epichlorhydrin und $\alpha$-Methylfluorhydrin, Polyisocyanate wie 2,4-Toluylendiisocyanat und Hexamethylendiisocyanat, Alkylencarbonate wie 1,3-Dioxolan-2-on und 4-Methyl-1,3-dioxolan-2-on, polyquaternäre Amine wie Kondensationsprodukte von Dimethylamin mit Epichlorhydrin, Homo- und Copolymere von Diallyldimethylammoniumchlorid sowie Homo- und Copolymerisate von Dimethylaminoethyl(meth)acrylat, die gegebenenfalls mit beispielsweise Methylchlorid quaterniert sind.

Weitere geeignete Vernetzer sind polyvalente Metallionen, die in der Lage sind, ionische Vernetzungen auszubilden. Beispiele für solche Vernetzer sind Magnesium-, Calcium-, Barium- und Aluminiumionen. Diese Vernetzer werden beispielsweise als Hydroxyde, Carbonate oder Hydrogencarbonate der wässrigen polymerisierbaren Lösung zugesetzt. Ein besonders bevorzugter Vernetzer dieser Art ist Natriumaluminat.

Weitere geeignete Vernetzer sind multifunktionelle Basen, die ebenfalls in der Lage sind, ionische Vernetzungen auszubilden, beispielsweise Polyamine oder deren quaternierte Salze. Beispiele für Polyamine sind Ethylendiamin, Diethylentriamin, Triethylentetramin, Tetraethylenpentamin, Pentaethylenhexamin und Polyethylenimine sowie Polyvinylamine mit Molmassen von jeweils bis zu 4000000.

(I-C) Initiatoren für die polymerisierbaren wässrigen Mischungen

Als Polymerisationsinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die so genannten Redoxkatalysatoren. Bevorzugt ist der Einsatz von wasserlöslichen Initiatoren. Auch eine Initiierung der Polymerisation durch Einwirkung von Elektronenstrahlen auf die polymerisierbare, wässrige Mischung ist möglich. Die Polymerisation kann allerdings auch in Abwesenheit von Initiatoren der oben genannten Art durch Einwirkung energiereicher Strahlung in Gegenwart von Photoinitiatoren ausgelöst werden. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, Di-(2-ethylhexy1)-peroxidicarbonat, Dicyclohexylperoxydicarbonat, Di-(4-tert.-butylcyclohexyl)peroxidicarbonat, Dimyristilperoxidicarbonat, Diacetylperoxydicarbonat, Allylperester, Cumylperoxyneodecanoat, tert.-Butylper-3,5,5-tri-methylhexanoat, Acetylcyclohexylsulfonylperoxid, Dilaurylperoxid, Dibenzoylperoxid und tert.-Amylperneodekanoat. Besonders geeignete Polymerisationsinitiatoren sind wasserlösliche Azostarter, z.B. 2,2'-Azobis-(2-amidinopropan)dihydrochlorid, 2,2'-Azobis-(N,N'-dimethylen)isobutyramidin-dihydrochlorid, 2-(Carbamoylazo)isobutyronitril, 2,2'-Azobis[2-(2'-imidazolin-2-yl)propan]dihydrochlorid und 4,4'-Azobis-(4-cyanovaleriansäure).

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, - hyposulfit, -pyrosulfit oder -sulfid, Metallsalze, wie Eisen-II-ionen oder Silberionen oder Natriumhydroxymethylsulfoxylat.

Wenn man die Polymerisation durch Einwirkung energiereicher Strahlung auslöst, verwendet man üblicherweise als Initiator so genannte Photoinitiatoren. Hierbei kann es sich beispielsweise um so genannte α-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanthon-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethylamino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzy1iden)-4-methylcyclohexanon.

(I-D) Emulgatoren und andere Hilfsstoffe

Die Emulgatoren sind für die Herstellung und die Stabilisierung des Schaums von entscheidender Bedeutung. Man kann anionische, kationische oder nichtionische Emulgatoren oder Emulgatormischungen verwenden, die miteinander verträglich sind. Man kann niedermolekulare oder auch polymere Emulgatoren (Schutzkolloide) einsetzen, wobei sich Kombinationen unterschiedlicher oder auch gleichartiger Typen von Emulgatoren als vorteilhaft herausgestellt haben. Des Weiteren können Partikel zur Stabilisierung des Schaums verwendet werden, insbesondere Polymerpartikel und andere, die beispielsweise in WO 2007/068127 A1 beschrieben werden.

Die Emulgatoren, Schutzkolloide oder Partikel können unabhängig von ihrer sonstigen Beschaffenheit geeignete Gruppen aufweisen, beispielsweise ethylenisch ungesättigte Gruppen, um an der Polymerisationsreaktion teilzunehmen, um in das Polymer eingebaut zu werden.

Einsetzbare nichtionische Emulgatoren sind aliphatische Ethoxylate langkettiger linearer oder verzweiger Alkohole, Fettsäureamide oder Fettsäureamine sowie Blockcopolymere aus Polyethylenoxid/Polypropylenoxid oder Blockcopolymere aus Polyethylenoxid/Polypropylenoxid mit ethylenisch ungesättigten Monomeren aus (I-A) sowie Styrol. Bevorzugt werden Ethoxylate langkettiger Alkanole, insbesondere von Fettalkoholen oder Oxoalkoholen verwendet. Geeignete Alkohole sind $C_8$- bis $C_{36}$-Alkohole, vorzugsweise $C_{10}$- bis $C_{22}$-Alkohole, besonders bevorzugt $C_{12}$- bis $C_{18}$-Alkohole. Der mittlerer Ethoxylierungsgrad beträgt typischerweise 3 bis 80. Des Weiteren können als nichtionische Emulgatoren auch Alkylpolyglucoside verwendet werden.

Weitere gebräuchliche Emulgatoren sind vorzugsweise anionischer Natur. Hierzu zählen neutralisierte $C_8$- bis $C_{12}$-Alkylsulfate, von Schwefelsäurehalbestern ethoxylierter linearer oder verzweiger $C_{12}$- bis $C_{18}$-Alkanole mit einem mittlerer Ethoxylierungsgrad von 2 bis 80, von $C_{12}$- bis $C_{18}$-Alkylsulfonsäuren und von $C_8$- bis $C_{18}$-Alkylarylsulfonsäuren oder Sulfobernsteinsäureester oder-halbester oder -esteramide. Auch neutralisierte primäre oder sekundäre Alkyl- oder ethoxilierte Alkylphospate oder Phosphonate mit einem mittlerer Ethoxylierungsgrad von 2 bis 80 und einem $C_{12}$- bis $C_{18}$-Alkylrest können eingesetzt werden. Die Emulgatoren liegen bevorzugt als Natrium- oder Kalium- oder Ammoniumsalze oder in Form substituierter Ammoniumsalze, wie z.B. dem Triethanolamin-, Diethanolamin-, Monoethanolamin-Salz vor.

Weitere geeignete Emulgatoren finden sich in Houben-Weyl, Methoden der organischen Chemie, Band XIV/1, Makromolekulare Stoffe, Georg- Thieme Verlag, Stuttgart, 1961, Seiten 192 bis 208).

Auch kationische Emulgatoren sind geeignet. Beispiele hierfür sind die mit Dimethylsulfat quaternierten Umsetzungsprodukte von 6,5 Mol Ethylenoxid mit 1 Mol Oleylamin, Distearyldimethylammoniumchlorid, Lauryltrimethylammoniumchlorid, Cetylpyridiniumbromid und mit Dimethylsulfat quaternierter Stearinsäuretriethanolaminester, der bevorzugt als kationischer Emulgator eingesetzt wird.

Darüber hinaus können geeignete Schutzkolloide; alleine oder in Kombination mit vorstehenden Emulatoren, wie beispielsweise Polyvinylalkohole, Cellulosederivate oder Vinylpyrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, Seiten 411 bis 420.

Die polymerisierbaren wässrigen Mischungen können gegebenenfalls mindestens einen Lösevermittler enthalten. Hierunter sollen mit Wasser mischbare organische Lösemittel verstanden werden, z.B. Alkohole, Glykole, Polyethylenglykole bzw. davon abgeleitete Monoether, wobei die Monoether keine Doppelbindungen im Molekül enthalten. Geeignete Ether sind Methylglykol, Butylglykol, Butyldiglykol, Methyldiglykol, Butyltriglykol, 3-Ethoxy-1-propanol und Glycerinmonomethylether.

Die polymerisierbare wässrige Mischung kann gegebenenfalls Verdicker, Schaumstabilisatoren, Polymerisationsregler, Füllstoffe und Zellkeimbildner enthalten. Verdicker werden beispielsweise zur Optimierung der Schaumstruktur und zur Verbesserung der Schaumstabilität eingesetzt. Man erreicht damit, dass der Schaum während der Polymerisation nur geringfügig schrumpft. Als Verdickungsmittel kommen alle hierfür bekannten natürlichen und synthetischen Polymeren in Betracht, die die Viskosität eines wässrigen Systems stark erhöhen. Hierbei kann es sich um wasserquellbare oder wasserlösliche synthetische und natürliche Polymere handeln. Als Verdicker sind auch pulverförmige Superabsorber geeignet. Eine ausführliche Übersicht über Verdicker findet man beispielsweise in den Veröffentlichungen von R.Y. Lochhead und W.R. Fron, Cosmetics & Toiletries, 108, 95-135 (Mai 1993) und M.T. Clarke, "Rheological Additives" in D. Laba (ed.) "Rheological Properties of Cosmetics and Toiletries", Cosmetic Science and Technology Series, Vol. 13, Marcel Dekker Inc., New York 1993. Als Verdicker in Betracht kommende wasserquellbare oder wasserlösliche synthetische Polymere sind beispielsweise hochmolekulare Polymerisate der oben beschriebenen Säuregruppen enthaltenden monoethylenisch ungesättigten Monomeren. Solche Verdicker sind beispielsweise hochmolekulare Homopolymerisate von Acrylsäure und/oder Methacrylsäure oder geringfügig vernetzte Copolymerisate aus Acrylsäure und/oder Methacrylsäure und einer Verbindung, die mindestens 2 ethylenisch ungesättigte Doppelbindungen enthält, z.B. Butandioldiacrylat. Außerdem eignen sich hochmolekulare Polymerisate von Acrylamid und Methacrylamid oder Copolymerisate aus Acrylsäure und Acrylamid mit Molmassen von mehr als 1 Million. Solche Copolymerisate sind als Verdickungsmittel bekannt. Auch hochmolekulare Polyethylenglykole oder Copolymerisate aus Ethylenglykol und Propylenglykol sowie hochmolekulare Polysaccharide wie Stärke, Guarkernmehl, Johannisbrotkernmehl oder Derivate von Naturstoffen wie Carboxymethylcellulose, Hydroxyethylcellulose, Hydroxymethylcellulose, Hydroxypropylcellulose und Cellulose Mischether sind bekannte Verdicker. Eine weitere Gruppe von Verdickern sind wasserunlösliche Produkte, wie feinteiliges Siliciumdioxid, pyrogene Kieselsäuren, Fällungskieselsäuren in hydrophilen oder hydrophoben Modifikationen, Zeolithe, Titandioxid, Cellulosepulver, oder andere von Superabsorbern verschiedene feinteilige Pulver von vernetzten Polymerisaten.

(I-G) Gas

Als Gas wird vorzugsweise Luft, Kohlendioxid, Helium, Neon, Argon, Schwefelhexafluorid und insbesondere Stickstoff eingesetzt. Weiterhin können halogenierte Kohlenwasserstoffe verwendet werden, beispielsweise Dichlordifluormethan, 1,2-Dichlor-1,1,2,2-tetrafluorethan. Es ist natürlich auch möglich, Mischungen dieser Gase zu verwenden.

(I-L) Lösungsmittel

Als Lösungsmittel werden vorzugsweise gegenüber den eingesetzten Edukten inerte Flüssigkeiten eingesetzt, insbesondere Wasser.

Anstelle der in (I-A) angegebenen ethylenisch ungesättigten Monomere können auch die üblichen Vorläufer für Polyadditions- und Polykondensationsprodukte eingesetzt werden, also beispielsweise Diisocyanate und Polyole zur Herstellung von Polyurethanen-Schäumen.

Bei der erfindungsgemäßen Herstellung von Polymerschäumen wird in einer ersten Verfahrensstufe eine polymerisierbare, wässrige Mischung in einem mikrofluidischen Verfahren geschäumt.

Die Herstellung des Schaums erfolgt in einer Ausführung der Erfindung getrennt von der Polymerisation. Es ist aber auch möglich, die Polymerisation bereits bei der Schaumbildung zu starten und nach Abschluss der Schaumbildung zu Ende zu führen. Die erfindungsgemäß in der ersten Stufe noch nicht auspolymerisierten Schäume sind über einen Zeitraum, z. B. bis zu einer Stunde stabil, so dass sie problemlos gehandhabt werden können.

Die noch nicht polymerisierten schaumförmigen Mischungen können beispielsweise für die nachfolgende Polymerisation in eine geeignete Form gebracht werden, um die für eine bestimmte Anwendung gewünschten Formkörper herzustellen. Der bei der Formgebung der geschäumten polymerisierbaren wässrigen Mischung möglicherweise anfallende Abfallschaum kann ohne weiteres in den Prozess zurückgeführt werden. Das geschäumte polymerisierbare Material kann beispielsweise in der gewünschten Stärke auf ein temporäres Trägermaterial, das vorteilhafterweise mit einer Antihaft-Beschichtung ausgestattet ist, aufgetragen werden. Man kann beispielsweise den Schaum auf eine Unterlage aufrakeln. Eine andere Möglichkeit besteht darin, die polymerisierbare schaumförmige wässrige Mischung in Formen einzufüllen, die ebenfalls antihaftbeschichtet sind und den Schaum darin auszupolymerisieren.

Da die geschäumte polymerisierbare wässrige Mischung eine lange Standzeit aufweist, eignet sich diese Mischung auch für die Herstellung von Verbundmaterialien. So kann beispielsweise der nach der Schlagschaumerzeugung hergestellte polymerisierbare Schaum auf ein permanentes Trägermaterial aufgebracht werden, z. B. Folien aus Polymeren (z.B. Folien aus Polyethylen, Polypropylen oder Polyamid) oder Metallen, Vliesen, Fluff, Tissues, Gewebe, natürliche oder synthetische Fasern, oder auf andere Schäume. Bei der Herstellung von Verbundmaterialien kann es unter Umständen auch vorteilhaft sein, den polymerisierbaren Schaum in Gestalt von bestimmten Strukturen oder in unterschiedlicher Schichtdicke auf ein Trägermaterial aufzubringen. Es ist jedoch auch möglich, den polymerisierbaren Schaum auf Fluff-Schichten aufzutragen und sie so zu imprägnieren, dass der Fluff nach der Polymerisation integraler Bestandteil des Polymerschaums ist. Die in der ersten Verfahrensstufe erhältliche geschäumte polymerisierbare wässrige Mischung kann auch zu großen Blöcken geformt und polymerisiert werden. Die Blöcke können nach der Polymerisation zu kleineren Formkörpern geschnitten oder gesägt werden. Man kann auch sandwichartige Strukturen herstellen, indem man eine geschäumte polymerisierbare wässrige Mischung auf eine Unterlage aufträgt, die schaumförmige Schicht mit einer Folie, Vliesen, Tissues, Geweben, Fasern oder anderen Schäumen gegebenenfalls aus einem anderen Material als die zunächst verwendete Unterlage abdeckt und wiederum Schaum aufträgt und gegebenenfalls mit einer weiteren Folie, Vliesen, Tissues, Geweben, Fasern oder anderen Schäumen abdeckt. Der Verbund wird dann in der zweiten Verfahrensstufe der Polymerisation unterworfen. Man kann jedoch auch sandwichartige Strukturen mit weiteren Schaumschichten herstellen.

In der zweiten Stufe des Verfahrens zur Herstellung der erfindungsgemäßen Polymerschäume erfolgt die Polymerisation der geschäumten polymerisierbaren wässrigen Mischung. Die Polymerisation kann je nach verwendetem Initiator durch Temperaturerhöhung, durch Lichteinwirkung, durch Bestrahlen mit Elektronenstrahlen oder auch durch Temperaturerhöhung und Lichteinwirkung erfolgen. Um die Temperatur der geschäumten polymerisierbaren wässrigen Mischung zu erhöhen, kann man alle in der Technik üblichen Verfahren anwenden, beispielsweise den Schaum mit heizbaren Platten in Kontakt bringen, Einwirkung von Infrarotbestrahlung auf den polymerisierbaren Schaum oder Beheizen mit Hilfe von Mikrowellen. Falls dickere Schichten eines Polymerschaumstoffs hergestellt werden sollen, z.B. Schäume mit Dicken von mehreren Zentimetern, ist die Erwärmung des polymerisierbaren geschäumten Materials mit Hilfe einer Mikrowelle besonders vorteilhaft, weil auf diesem Wege eine relativ gleichmäßige Erwärmung erreicht werden kann.

Die Polymerisation erfolgt beispielsweise bei Temperaturen von 20 bis 180, vorzugsweise in dem Bereich von 20 bis 100°C.

Bei Initiierung der Polymerisation durch Lichteinwirkung auf das geschäumte, polymerisierbare Material kann man alle konventionellen Belichtersysteme anwenden, sofern ihr Emissionsspektrum an den eingesetzten Photoinitiator adaptiert ist. Bei einem Start der Polymerisation durch Belichten wird vorteilhaft eine Kombination eines Photoinitiators und eines thermischen Initiators oder/ und aber ein Photoinitator eingesetzt, der auch als thermischer Initiator wirken kann, z.B. Azoinitiatoren. Da sich der Schaum während der Polymerisation durch die hohe Polymerisationswärme stark erwärmt, wird auf diese Weise ein besonders schneller und effektiver Ablauf der Polymerisationsreaktion erreicht. Bei der Initiierung durch Lichteinwirkung liegt die Polymerisationstemperatur in dem Bereich von 0 bis 150, vorzugsweise 10 bis 100°C.

Ein wesentlicher Vorteil des erfindungsgemäßen Verfahrens ist darin zu sehen, dass die Polymerisation unter weitgehendem Erhalt der Struktur der geschäumten polymerisierbaren wässrigen Mischung abläuft, d.h. der polymerisierbare Schaum verändert während der Polymerisation sein Volumen nur unwesentlich. Die Polymerisationsreaktion wird durch die Starttemperatur, die Initiierungstechnik oder die Wärmeabfuhr beeinflusst. Die Polymerisationstemperatur wird vorzugsweise dahingehend kontrolliert, dass ein Sieden der polymerisierbaren wässrigen Mischung vermieden wird. Mit fortschreitender Polymerisation tritt eine Verfestigung des Polymerschaums infolge zunehmender Gelbildung ein. Nach Beendigung der Polymerisation liegt ein schaumförmiges Hydrogel vor, dass einen Wassergehalt von 30 bis 80 Gew.-% hat. Je nach Verfahren können offen- oder geschlossenzellige Polymerschäume hergestellt werden.

Für die Anwendung des Polymerschaums als Superabsorber ist eine Restfeuchte von 1 bis 45, vorzugsweise 15 bis 35 Gew.-% wünschenswert. Das bei der Polymerisation anfallende schaumförmige Hydrogel wird daher meistens getrocknet. Um einen flexiblen Polymerschaum zu erhalten, muss der Schaum eine gewisse Restfeuchte aufweisen.

Der Wassergehalt hängt stark von der Dichte des erzeugten Schaums ab. Je höher die Dichte ist, desto mehr Restfeuchte ist einzustellen. Daher kann eine Obergrenze von 35 bis 45 Gew.-% Wasser durchaus sinnvoll sein. Wird ein Ansatz mit sehr hohem Festgehalt polymerisiert, der einen Polymerschaum mit einer sehr hohen Dichte ergibt, kann es sogar notwendig sein, nach der Polymerisation den Polymerschaum weiter anzufeuchten, um die notwendige Flexibilität zu erhalten.

Der Polymerschaum kann mit Hilfe aller konventionellen Techniken getrocknet werden, beispielsweise durch Erhitzen mit einem heißen Gasstrom, durch Anliegen von Vakuum, durch Infrarotbestrahlung oder durch Erhitzen mit Mikrowellenstrahlung. Die Mikrowellenstrahlung erweist sich auch hier wiederum beim Trocknen von groß-volumigen Formkörpern als vorteilhaft.

Nach dem erfindungsgemäßen Verfahren erhält man im Allgemeinen einen überwiegend oder zumindest teilweise offenzelligen Schaum, der relativ hart und spröde ist. Die Herstellung von geschlossenzelligen Schäumen ist möglich durch Anpassung der Reaktionsbedingungen, insbesondere bei sehr schneller Polymerisation.

Für viele Anwendungen werden jedoch Schäume verlangt; die flexibel sind. Der zunächst erhaltene relativ harte und spröde Polymerschaum kann jedoch flexibilisiert werden. Dies kann mit Hilfe von externen Weichmachern oder durch eine interne Flexibilisierung geschehen.

Externe Weichmacher sind Komponenten, die zusätzlich zu den gelbildenden Komponenten entweder der Reaktionsmischung vor dem Verschäumen zugesetzt werden, oder die nachträglich auf den Polymerschaum aufgetragen werden. Als Weichmacher kommen beispielsweise hydrophile und hygroskopische Substanzen in Betracht. Eine externe Flexibilisierung wird in erster Linie durch das gezielte Einstellen eines bestimmten Restwassergehalts erreicht. Weiterhin kann die Flexibilisierung durch den Einsatz von beispielsweise Polyolen wie Glycerin, Polyalkylenglykolen wie Polyethylen-glykolen oder Polypropylenglykolen, oder kationische Emulgatoren verbessert werden. Geeignete kationische Emulgatoren sind beispielsweise mit Dimethylsulfat quaternierte ümsetzungsprodukte von 1 Mol Oleylamin mit 5 bis 10 Mol Ethylenoxid, Distearyldimethylammoniumchlorid, Lauryltrimethylammoniumchlorid, Cetylpyridiniumbromid und Ethanolaminester langkettiger Fettsäuren wie Stearinsäurediethanolaminester, Stearinsäuremonoethanolaminester und Stearinsäuretriethanolaminester, der bevorzugt als externer Weichmacher eingesetzt wird.

Unter interner Flexibilisierung des Polymerschaums wird der Einsatz von weichmachenden Komponenten verstanden, die in die Gelstruktur eingebaut werden. Hierbei kann es sich um Substanzen handeln, die selbst ungesättigte Gruppen tragen und bei der Polymerisation als Monomere in der polymerisierbaren wässrigen Mischung vorliegen und mit in die Gelstruktur eingebaut werden oder die mit dem gelbildenden Material reagieren. Der interne Weichmacher soll eine Erniedrigung der Glastemperatur des Polymeren bewirken, das den Polymerschaum darstellt. Als interne Weichmacher sind beispielsweise Olefine, Ester aus ethylenisch ungesättigten C3 bis C5-Carbonsäuren und einwertigen C2 bis C30-Alkoholen oder Polyethylenglykol- oder Polypropylenglykolmonoester von mono-ethylenisch ungesättigten C3- bis C5-Carbonsäuren geeignet. Zur internen Flexibilisierung eignen sich diejenigen Monomeren (b), die die Glastemperatur der entstehenden Copolymerisate mit den Monomeren (a) herabsetzen, z.B. Vinylester von mindestens 4 C-Atome enthaltenden gesättigten Carbonsäuren, Alkylvinylether mit mindestens 2 C-Atomen in der Alkylgruppe, Vinyllactame und alkyl-substituierte Styrole wie Ethylstyrol.

Es kann wünschenswert sein, den Vernetzungsgrad des Polymerschaumes nachträglich zu verändern. Um dieses Ziel zu erreichen, kann man beispielsweise während der Polymerisation durch den Zusatz geeigneter Monomere in das Gel latente Vernetzungsstellen einbauen, die unter den Bedingungen der Polymerschaumherstellung nicht zu Vernetzungsreaktionen führen, jedoch unter speziellen Bedingungen, die nachträglich angewandt werden können, z.B. durch stark erhöhte Temperatur, in der Lage sind, weitere Vemetzungspunkte in der Gelstruktur zu bilden. Als Beispiele für solche Monomere kann der Einbau von Hydroxygruppen enthaltenden Verbindungen dienen, die bei höherer Temperatur, d.h. bei Temperaturen oberhalb von 150°C in der Lage sind, mit den Carboxylgruppen in der Polymerschaumstruktur zu reagieren. Geeignete Verbindungen, die latente Vernetzungsstellen aufweisen, sind beispielsweise Hydroxyethylacrylat, Hydroxypropylacrylat, Hydroxybutylacrylat, Monoacrylsäureester des Glycerins, Monoacrylate oder Monomethacrylate von Polyethylenglykolen mit mindestens 2 Ethylenglykoleinheiten, Monoacrylate oder Monomethacrylate von Polypropylenglykolen mit mindestens 2 Propylenglykoleinheiten und Monomethacrylate von mehrwertigen Alkoholen, z.B. Hydroxybutylmethacrylat, Hydroxypropylmethacrylat, Hydroxyethylmethacrylat oder Glycerinmonomethacrylat.

Als weitere Möglichkeit einer homogenen Nachvemetzung bietet sich der nachträgliche Zusatz von Vernetzungsreagenzien an, d.h. Verbindungen, die mindestens zwei reaktive Gruppen aufweisen, die unter geeigneten Bedingungen in der Lage sind, z.B. beim Erhitzen auf Temperaturen oberhalb von 70°C, mit den Säuregruppen des schaumförmigen Hydrogels zu reagieren. In diesem Falle ist es auch möglich, gesteuert über die Eindringtiefe des Vernetzers, eine Modifikation der inhomogenen Vemetzungsdichte zu erreichen. Geeignete Vernetzer bilden mit den Carboxylgruppen der Polymermatrix kovalente oder ionische Bindungen. Geeignete Vernetzungsmittel sind Verbindungen, die mindestens zwei funktionelle Gruppen der gleichen oder unterschiedlicher Art aufweisen, z.B. Hydroxy-, Amino-, quatemäre Ammonium-, Isocyanato-, Epoxi-, Aziridino-, Ester- oder Amidgruppen. Bevorzugte Nachvernetzungsmittel sind Polyalkohole wie Glycerin oder Bisepoxide. Das Auftragen der Vernetzungsmittel auf das geschäumte Material kann beispielsweise durch Sprühen, Tauchen oder durch Gasphasenabscheidung erfolgen.

Die erfindungsgemäßen Polymerschäume haben beispielsweise eine Dichte von 0,001 bis 1,8 g/cm³, vorzugsweise 0,005 bis 1 g/cm³. Die Dichte von Polymerschäumen wird gravimetrisch bestimmt. Aus einer gleichmäßigen Polymerschaumschicht mit einer definierten Dicke zwischen 3 und 5 mm schneidet man beispielsweise mit einem scharfen Messer Quadrate mit einer Seitenlänge von 5 cm aus. Diese Proben werden gewogen und das erhaltene Gewicht durch das aus den Maßen errechnete Volumen dividiert.

Um die aus dem Polymerschaum extrahierbaren Anteile zu bestimmen, wird eine getrocknete und gemahlene Polymerschaumprobe in einer 0,9 gew.-%-igen Kochsalzlösung dispergiert und die Dispersion 1 Stunde gerührt. Danach filtriert man das schaumförmige Material ab und bestimmt die Menge des extrahierten Anteils im Filtrat titrimetrisch.

Die Aufnahmekapazität des Polymerschaums an Wasser pro Gramm Polymerschaum wird an Polymerschaumstücken bestimmt, die eine Dicke von 3 mm haben und jeweils 1 g wiegen. Die Prüfung der Retention erfolgt hierbei nach dem so genannten Teebeuteltest. Als Flüssigkeit dient dabei eine 0,9 %-ige Kochsalzlösung. 1 g des schaumförmigen Materials wird in einen Teebeutel gefüllt, der dann verschlossen wird. Der Teebeutel wird danach eine bestimmte Zeit lang in die Flüssigkeit eingetaucht und nach einer Abtropfdauer von 10 Minuten zurück gewogen. Für die Berechnung der Absorptionskapazität muss ein Blindversuch durchgeführt werden, bei dem ein Teebeutel ohne Polymerschaum in die Lösung eingetaucht und das Gewicht des Teebeutels nach der oben angegebenen Abtropfdauer von 10 Minuten bestimmt wird. Die Aufnahmekapazität ergibt sich dann aus folgender Beziehung:

$$\text{Aufnahmekapazität} = \frac{\text{Gewicht des Teebeutels mit Polymerschaum} - \text{Gewicht des Teebeutels im Blindversuch}}{\text{Gewicht des eingewogenen Polymerschaums}}$$

Die Retention wird folgendermaßen ermittelt:

Gleiche Vorgehensweise wie oben, nur wird anstelle des Abtropfens der Teebeutel 3 min. in einer Zentrifuge mit einer Beschleunigung von 250 g geschleudert.

$$\text{Retention} = \frac{\text{Gewicht des Teebeutels nach dem Schleudern} - \text{Gewicht des Teebeutels im Blindversuch}}{\text{Gewicht des eingewogenen Polymerschaums}}$$

Die Aufnahmegeschwindigkeit (Absorption Speed, im Folgenden mit AS bezeichnet) wurde dadurch ermittelt, dass man aus gleichmäßig 3 mm dicken Polymerschaumschichten rechteckige Proben mit einem Gewicht von 1 g mit Hilfe eines scharfen Messers ausschnitt. Diese Proben wurden in einer Petrischale mit 20 g Testflüssigkeit übergossen. Mit Hilfe einer Stoppuhr wurde die Zeit ermittelt, die der Polymerschaumstoff benötigte, um die Testflüssigkeit vollständig aufzunehmen. Die Aufnahmegeschwindigkeit (AS) in g/g-sec errechnet sich zu:

$$AS = 20 \text{ g/[l g* gemessene Zeit (in sec)]}$$

Ferner wird bei diesem Test die Gleichmäßigkeit der Flüssigkeitsaufnahme nach einer 6-stufigen Notenskala bewertet. Die Noten 1-6 haben folgende Bedeutung:

1. Der Polymerschaum quillt von Anfang an homogen.
2. Der Polymerschaum quillt nach wenigen Sekunden homogen.
3. Der Polymerschaum quillt nach 30 sec homogen.
4. Der Polymerschaum quillt die ganze Zeit inhomogen, aber nur ein kleiner Teil ist davon betroffen.
5. Der Polymerschaum quillt die ganze Zeit inhomogen, aber ein wesentlicher Teil ist davon betroffen.
6. Der Polymerschaum quillt die ganze Zeit nur an der Oberfläche.

Rezeptur für die Testflüssigkeit:

in 1 Liter destilliertem Wasser werden die folgenden Salze gelöst:

2,00 g KCl

2,00 g Na$_2$SO$_4$

0,85 g NH$_4$H$_2$PO$_4$

0,15 g (NH$_4$)$_2$HPO$_4$

0,19 g CaCl$_2$

0,23 g MgCl$_2$

Die eingesetzten Salze müssen wasserfrei sein.

Stabilität des Polymerschaums im gequollenen Zustand.

Anhand der in obigem Test erhaltenen Proben wurde die Stabilität des ausgequollenen Materials nach einer 4-stufigen Notenskala bewertet. Die Noten 1-4 bedeuten dabei:

1. Der Polymerschaum kann unversehrt aus der Petrischale genommen werden und kann um 180° gebogen werden, ohne dass er reißt.
2. Der Polymerschaum kann unversehrt aus der Petrischale genommen werden.
3. Der Polymerschaum reißt beim Herausnehmen aus der Petrischale.
4. Der Polymerschaum zerfällt zu einem unzusammenhängenden Gelhaufen.

Die oben beschriebenen, wasserabsorbierenden Polymerschäume können für sämtliche Zwecke verwendet werden, für die die in der Literatur beschriebenen Polymerschäume eingesetzt werden. Sie werden z.B. in Sanitärartikeln, die zur Adsorption von Körperflüssigkeiten eingesetzt werden und in Verbandmaterial zur Abdeckung von Wunden verwendet. Sie eignen sich beispielsweise als wasserabsorbierender Bestandteil in Windeln, Damenbinden und Inkontinenzartikeln. Sie können in Form von Verbundmaterialien eingesetzt werden. Polymerschäume können außerdem als Dichtungsmaterial, als Bodenverbesserungsmittel, als Bodenersatzstoff und als Verpackungsmaterial verwendet werden. Spezielle Ausgestaltungen von Gegenständen, die Polymerschäume enthalten, werden beispielsweise ausführlich in der WO-A-94/22502 beschrieben. Die Polymerschäume eignen sich außerdem zur Entwässerung von Schlämmen, zum Eindicken wässriger Lacke, z.B. für die Entsorgung von Restmengen nicht verbrauchter wässriger Lacke oder Farben, indem man z.B. pulverförmige Polymerschäume zu wässrigen Lackresten zugibt, bis eine Verfestigung eintritt. Die Polymerschäume können außerdem zur Entwässerung von wasserhaltigen Ölen verwendet werden. Sie können beispielsweise in Form eines Pulvers mit einem mittleren Teilchendurchmesser von 150 μm bis 5 mm bei den oben beschriebenen Anwendungen eingesetzt werden.

Die oben beschriebenen Schäume können aufgrund ihrer Eigenschaften verschiedene Funktionen in Hygieneartikeln bei der Speicherung von Körperflüssigkeiten erfüllen:

- Akquisition
- Distribution und/oder
- Speicherung.

Die Speicherung von Körperflüssigkeiten wird von den Schäumen vollständig übernommen, während für die Funktionen Akquisition und Distribution gegebenenfalls weitere Bestandteile wie high loft-Nonwovens, Polypropylen-Vliese, Polyester-Vliese oder chemisch modifizierte Zellstoffe unterstützend als Schicht auf den Schäumen Verwendung finden können.

Die Prozentangaben in dem folgenden Beispiel bedeuten Gewichtsprozent, sofern aus dem Zusammenhang nichts anderes hervorgeht.

Beispiel:

In einen Mikrofluid-Reaktor gemäß Figur 1 mit einem Durchmesser des Austrittskanals von 550 μm werden folgende Stoffströme eingebracht:

$Q_{L1}$: Lösung L1:2 - 3,3 ml/Minute
$Q_{L2}$: Lösung L2:2 - 3,3 ml/Minute
$Q_G$: Gas:: 0,4 ml/Minute

Als Gas wurde Luft oder Stickstoff eingesetzt.

Die Zusammensetzung der Lösungen L1 und L2 ergibt sich aus folgender Tabelle 1: Tabelle 1

| Verbindung | Menge [g] | L1 | L2 |
|---|---|---|---|
| Acrylamid | 20 | X | - |
| N.N'-Methylenbisacrylamid | 0,53 | X | - |
| N,N,N',N'-Tetramethylethylendiamin | 1,57 | X | - |
| Ethylenoxid-Additionsprodukte | 0,18 | X | - |
| Destilliertes Wasser | 48 | X | - |
| Sodiumperoxodisulfat | 4 | - | X |
| Ethylenoxid-Additionsprodukte | 0,18 | - | X |
| Destilliertes Wasser | 50 | - | X |

Die Polymerisation begann, sobald die Flüssigkeiten L1 und L2 in Kontakt traten. Gleichzeitig bildeten sich im Stoffstrom Bläschen aus dem zugeführten Gas G im Austrittskanal K, unterbrochen und eingehüllt durch die Lösungen L1 und L2 und deren Reaktionsprodukte. Aus der Austrittsöffnung des Reaktors trat ein teilweise schon polymerisierter Schaum aus. Dieser Schaum wurde unter folgenden Bedingungen auspolymerisiert:

Temperatur: 20°C
Zeit: 30 -60 Sekunden

Der fertige Schaum wies folgende Parameter auf:

Struktur: Dichte Packung der Blasen (hexagonal dichteste Packung)
Morphologie: größtenteils offenzellige Schäume
Spezifische Oberfläche: $1{,}5 \times 10^4$ m$^2$/m$^3$
Aufnahmekapazität: 15 g/g.

Der erhaltene Schaum eignete sich aufgrund seiner Eigenschaften zur Absorption von Körperflüssigkeiten. Er kann u. a. eingesetzt werden in Verbandmaterial zur Abdeckung von Wunden, als Dichtungsmaterial, als Bodenverbesserungsmittel, als Bodenersatzstoff und als Verpackungsmaterial.

**Patentansprüche**

1. Verfahren zur Herstellung von Polymerschäumen durch

    1. Inkontaktbringen einer Lösung L1 enthaltend mindestens eine polymerisierbare Verbindung, welche ein monoethylenisch ungesättigtes Monomer ist, und ein Lösungsmittel L sowie gegebenenfalls mindestens einer Lösung L2 enthaltend eine polymerisierbare Verbindung und ein Lösungsmittel, welches gleich oder ungleich dem Lösungsmittel aus L1 sein kann mit
    2. einem oder mehreren in den verwendeten Lösungsmitteln nicht oder nur teilweise lösbarem Gas G, wobei wenigstens eine der Lösungen einen Emulgator oder einen anderen Hilfsstoff enthält, unter Bildung eines Schaumes durch Ausbildung von Stegen und/oder Wänden durch die Lösungen, welche das Gas G als Blasen einschließen und
    3. Polymerisation in einer anschließenden Verfahrensstufe,
    **dadurch gekennzeichnet, dass** die Lösungen sowie das Gas G unter mikrofluidischen Verfahrensbedingungen unter Ausbildung von Blasen des Gases G in Kontakt gebracht werden.

2. Verfahren nach Anspruch 1, **dadurch gekennzeichnet, dass** die Lösungen sowie das Gas G in einem Austrittskanal K eines Mikroreaktors in Kontakt gebracht werden, wobei sich das Gas G und die Lösungen in eine gemeinsame Flussrichtung im Austrittskanal K bewegen.

**3.** Verfahren nach wenigstens einem der vorhergehenden Ansprüche, **dadurch gekennzeichnet, dass** man als Gas G Luft, Stickstoff, Kohlendioxid, Helium, Neon, Argon, Schwefelhexafluorid, halogenierte Kohlenwasserstoffe oder Gemische davon verwendet.

**4.** Verfahren nach wenigstens einem der vorhergehenden Ansprüche; **dadurch gekennzeichnet, dass** die Lösung jeweils wenigstens ein monoethylenisch ungesättigtes Monomer, einen Vernetzer, einen Initiator und einen Emulgator enthält.

**5.** Verfahren nach wenigstens einem der vorhergehenden Ansprüche, **dadurch gekennzeichnet, dass** das Lösungsmittel Wasser ist oder enthält.

**6.** Verfahren nach wenigstens einem der vorhergehenden Ansprüche, **dadurch gekennzeichnet, dass** man

(a) als polymerisierbare Verbindung Acrylsäure, Methacrylsäure, Acrylamid, Methacrylamid, Vinylsulfonsäure, 2-Acrylamido-2-methylpropansulfonsäure oder deren Mischungen, und
(b) als Vernetzer N,N'-Methylenbisacrylamid, Ethylenglykoldiacrylat, Propylenglykoldiacrylat, Butandioldiacrylat, Ethylenglykoldimethacrylat, Propylenglykoldimethacrylat, Allylmethacrylat oder deren Mischungen einsetzt.

**7.** Verfahren nach wenigstens einem der vorhergehenden Ansprüche, **dadurch gekennzeichnet, dass** man als Vernetzer Monomere mit wenigstens zwei ethylenisch ungesättigten Doppelbindungen, Verbindungen mit mindestens einer polymerisierbaren, ethylenisch ungesättigten Gruppe und mindestens einer weiteren funktionellen Gruppe, Verbindungen mit wenigstens zwei funktionellen Gruppen, polyvalente Metallionen oder multifunktionelle Basen einsetzt.

**8.** Verfahren nach wenigstens einem der vorhergehenden Ansprüche, **dadurch gekennzeichnet, dass** man die Polymerisation der polymerisierbaren Verbindung durch in Radikale zerfallende Verbindungen, durch energiereiche Strahlung, oder durch Temperaturerhöhung oder durch Redox-Katalysatoren initiiert.

**9.** Verfahren nach Anspruch 2, **dadurch gekennzeichnet, dass** der Durchmesser des Austrittskanals K 10 Mikrometer bis 1000 Mikrometer beträgt und dass das interne Volumen pro Austrittskanal K $10^{-5}$ mm$^3$ bis 1 cm$^3$ beträgt und dass die Länge des Austrittskanals einem Vielfachen seines Durchmessers entspricht.

**10.** Polymerschaum, erhältlich nach wenigstens einem der vorhergehenden Verfahren, **dadurch gekennzeichnet, dass** er durch eine enge Blasengrößenverteilung und ein hohes Oberfläche-zu-Volumen-Verhältnis von größer als 1000 m$^2$/m$^3$ gekennzeichnet ist.

**11.** Verwendung der nach wenigstens einem der vorhergehenden Ansprüche erhältlichen Polymerschäume als Sanitärartikel, die zur Absorption von Körperflüssigkeiten eingesetzt werden, in Verbandmaterial zur Abdeckung von Wunden, als Dichtungsmaterial, als Bodenverbesserungsmittel, als Bodenersatzstoff und als Verpackungsmaterial.

**Claims**

**1.** A process for producing polymer foams by

1. contacting a solution L1 comprising at least one polymerizable compound which a monoethylenically unsaturated monomer and a solvent L, and optionally at least one solution L2 comprising a polymerizable compound and a solvent which may be identical or nonidentical to the solvent from L1, with
2. one or more gas(es) G which is/are only partly dissolvable, if at all, in the solvents used,
at least one of the solutions comprising an emulsifier or another assistant, to form a foam as a result of development of struts and/or walls by the solutions which enclose the gas G as bubbles, and
3. polymerizing in a subsequent process stage,
wherein the solutions and the gas G are contacted under microfluidic process conditions to develop bubbles of the gas G.

**2.** The process according to claim 1, wherein the solutions and the gas G are contacted in an exit channel K of a microreactor, the gas G and the solutions moving in a common flow direction within the exit channel K.

3. The process according to at least one of the preceding claims, wherein the gas G used is air, nitrogen, carbon dioxide, helium, neon, argon, sulfur hexafluoride, halogenated hydrocarbons or mixtures thereof.

4. The process according to at least one of the preceding claims, wherein the solution comprises in each case at least one monoethylenically unsaturated monomer, a crosslinker, an initiator and an emulsifier.

5. The process according to at least one of the preceding claims, wherein the solvent is or comprises water.

6. The process according to at least one of the preceding claims, wherein

(a) the polymerizable compound used is acrylic acid, methacrylic acid, acrylamide, methacrylamide, vinylsulfonic acid, 2-acrylamido-2-methylpropanesulfonic acid or mixtures thereof, and
(b) the crosslinker used is N,N'-methylenebisacrylamide, ethylene glycol diacrylate, propylene glycol diacrylate, butanediol diacrylate, ethylene glycol dimethacrylate, propylene glycol dimethacrylate, allyl methacrylate or mixtures thereof.

7. The process according to at least one of the preceding claims, wherein the crosslinkers used are monomers having at least two ethylenically unsaturated double bonds, compounds having at least one polymerizable, ethylenically unsaturated group and at least one further functional group, compounds having at least two functional groups, polyvalent metal ions or multifunctional bases.

8. The process according to at least one of the preceding claims, wherein the polymerization of the polymerizable compound is initiated by compounds which decompose to free radicals, by means of high-energy radiation, or by increasing the temperature or by means of redox catalysts.

9. The process according to claim 2, wherein the diameter of the exit channel K is from 10 micrometers to 1000 micrometers, and the internal volume per exit channel K is from $10^{-5}$ mm$^3$ to 1 cm$^3$, and the length of the exit channel corresponds to several times its diameter.

10. A polymer foam obtainable by at least one of the preceding processes, which is **characterized by** a narrow bubble size distribution and a high surface-to-volume ratio of greater than 1000 m$^2$/m$^3$.

11. The use of the polymer foams obtainable according to at least one of the preceding claims as sanitary articles which are used for absorption of body fluids, in dressing material for covering wounds, as a sealing material, as a soil improver, as a soil replacement and as a packaging material.

## Revendications

1. Procédé de fabrication de mousses polymères par

1. mise en contact d'une solution L1 contenant au moins un composé polymérisable, qui est un monomère monoéthyléniquement insaturé, et un solvant L, ainsi qu'éventuellement d'au moins une solution L2 contenant un composé polymérisable et un solvant, qui peut être identique ou différent du solvant de L1, avec
2. un ou plusieurs gaz G non ou seulement partiellement solubles dans les solvants utilisés,
au moins une des solutions contenant un émulsifiant ou un autre adjuvant, pour former une mousse par formation de segments et/ou de parois par les solutions, qui contiennent le gaz G sous la forme de bulles, et
3. polymérisation lors d'une étape de procédé ultérieure,
**caractérisé en ce que** les solutions et le gaz G sont mis en contact dans des conditions de procédé microfluidiques pour former des bulles du gaz G.

2. Procédé selon la revendication 1, **caractérisé en ce que** les solutions et le gaz G sont mis en contact dans un canal de sortie K d'un microréacteur, le gaz G et les solutions se déplaçant dans une direction d'écoulement commune dans le canal de sortie K.

3. Procédé selon au moins l'une quelconque des revendications précédentes, **caractérisé en ce que** de l'air, de l'azote, du dioxyde de carbone, de l'hélium, du néon, de l'argon, de l'hexafluorure de soufre, des hydrocarbures halogénés ou leurs mélanges sont utilisés en tant que gaz G.

**4.** Procédé selon au moins l'une quelconque des revendications précédentes, **caractérisé en ce que** la solution contient respectivement au moins un monomère monoéthyléniquement insaturé, un agent de réticulation, un initiateur et un émulsifiant.

**5.** Procédé selon au moins l'une quelconque des revendications précédentes, **caractérisé en ce que** le solvant est ou contient de l'eau.

**6.** Procédé selon au moins l'une quelconque des revendications précédentes, **caractérisé en ce que**

(a) l'acide acrylique, l'acide méthacrylique, l'acrylamide, le méthacrylamide, l'acide vinylsulfonique, l'acide 2-acrylamido-2-méthylpropanesulfonique ou leurs mélanges sont utilisés en tant que composé polymérisable, et (b) le N,N'-méthylènebisacrylamide, le diacrylate d'éthylène glycol, le diacrylate de propylène glycol, le diacrylate de butanediol, le diméthacrylate d'éthylène glycol, le diméthacrylate de propylène glycol, le méthacrylate d'allyle ou leurs mélanges sont utilisés en tant qu'agent de réticulation.

**7.** Procédé selon au moins l'une quelconque des revendications précédentes, **caractérisé en ce que** des monomères contenant au moins deux doubles liaisons éthyléniquement insaturées, des composés contenant au moins un groupe éthyléniquement insaturé polymérisable et au moins un autre groupe fonctionnel, des composés contenant au moins deux groupes fonctionnels, des ions métalliques polyvalents ou des bases multifonctionnelles sont utilisés en tant qu'agent de réticulation.

**8.** Procédé selon au moins l'une quelconque des revendications précédentes, **caractérisé en ce que** la polymérisation du composé polymérisable est initiée par des composés se décomposant en radicaux, par un rayonnement riche en énergie ou par une élévation de température ou par des catalyseurs redox.

**9.** Procédé selon la revendication 2, **caractérisé en ce que** le diamètre du canal de sortie K est de 10 micromètres à 1000 micromètres et **en ce que** le volume interne par canal de sortie K est de $10^{-5}$ mm$^3$ à 1 cm$^3$ et **en ce que** la longueur du canal de sortie correspond à un multiple de son diamètre.

**10.** Mousse polymère, pouvant être obtenue selon au moins l'un quelconque des procédés précédents, **caractérisée en ce qu'**elle est **caractérisée par** une distribution des tailles de bulles étroite et un rapport surface sur volume élevé supérieur à 1000 m$^2$/m$^3$.

**11.** Utilisation des mousses polymères pouvant être obtenues selon au moins l'une quelconque des revendications précédentes en tant qu'articles sanitaires utilisés pour l'absorption de fluides corporels, dans un matériau de pansement pour le recouvrement de blessures, en tant que matériau d'étanchéité, en tant qu'agent d'amélioration du sol, en tant que substitut de sol et en tant que matériau d'emballage.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9717397 A
- WO 0052087 A
- WO 9944648 A
- WO 03045541 A
- US 20070054119 A1
- WO 2005103106 A1
- EP 0640629 A
- EP 0327376 A
- WO 2007068127 A1
- WO 9422502 A


**In der Beschreibung aufgeführte Nicht-Patentliteratur**

- **G. M. WHITESIDE.** The Origins and the Future of Microfluidics. *Nature,* 2006, vol. 442, 368-372
- **M. HASHIMOTO ; P. GARSTECKI ; G.M. WHITE-SIDES.** Synthesis of Composite Emulsions and Complex Foams with the use of Microfluidic Flow-Focusing Devices. *small,* 2007, vol. 3 (10), 1792-1802
- **J.D. TICE ; H. SONG ; A.D. LYON ; R.F. ISMAGILOV.** Formation of Droplets and Mixing in Multiphase Microfluidics at Low Values of the Reynolds and the Capillary Numbers. *Langmuir,* 2003, vol. 19, 9127-9133
- **A.M. GANAN-CALVO ; J.M. GORDILLO.** Perfectly Monodisperse Microbubbling by Capillary Flow Focusing. *Phys. Rev. Lett.,* 2001, vol. 87 (27), 274501-1274501-4
- **S.L. ANNA ; N. BONTOUX ; H.A. STONE.** Formation of dispersions using "flow focusing" in microchannels. *Appl. Phys. Lett.,* 2003, vol. 82 (3), 364-366
- **B. W. JEONG ; J. KIM ; S. KIM ; S. LEE ; G. MENSING ; D.J. BEEBE.** Hydrodynamic microfabrication via "on the fly" photopolymerization of microscale fibers and tubes. *Lab Chip,* 2004, vol. 4, 576-580
- **V. HESSEL ; C. SERRA ; H. LÖWE ; G. HADZIIO-ANNOU.** Polymerisationen in mikrostrukturierten Reaktoren: Ein Überblick. *Chem. Ing. Tech.,* 2005, vol. 77 (11), 1693-1714
- **S. XU ; Z. NIE ; M. SEO ; P. LEWIS ; E. KUMACHEVA ; H.A. STONE ; P. GARSTECKI ; D.B. WEIBEL ; I. GITLIN ; G.M. WHITESIDES.** Generation of Monodisperse Particles by Using Microfluidics: Control over Size, Shape, and Composition. *Angew. Chem.,* vol. 117, 734-738
- **Z. NIE ; S. XU ; M. SEO ; P.C. LEWIS ; E. KUMACHEVA.** Polymer Particles with Various Shapes and Morphologies Produced in Continuous Microfluidic Reactors. *J. Am. Chem. Soc.,* 2005, vol. 127, 8058-8063
- **M. SEO ; Z. NIE ; S. XU ; M. MOK ; P.C. LEWIS ; R. GRAHAM ; E. KUMACHEVA.** Continuous Microfluidic Reactors for Polymer Particles. *Langmuir,* vol. 21, 11614-11622
- **S. ABRAHAM ; E.H. JEONG ; T. ARAKAWA ; S. SHOJI ; K.C. KIM ; I. KIM ; J.S. GO.** Microfluidics assisted synthesis of well-defined spherical polymeric microcapsules and their utilization as potential encapsulants. *Lab Chip,* 2006, vol. 6, 752-756
- **H. ZHANG ; E. TUMARKIN ; R. PEERANI ; Z. NIE ; R.M.A. SULLAN ; G.C. WALKER ; E. KUMACHEVA.** Microfluidic Production of Biopolymer Microcapsules with Controlled Morphology. *J. Am. Chem. Soc.,* 2006, vol. 128, 12205-12210
- **J.L. STEINBACHER et al.** Rapid Self-Assembly of Core-Shell Organosilicon Microcapsules within a Microfluidic Device. *J. Am. Chem. Soc.,* 2006, vol. 128, 9442-9447
- **J.-W. KIM ; A.S. UTADA ; A. FERNANDEZ-NIEVES ; Z. HU ; D.A. WEITZ.** Fabrication of Monodisperse Gel Shells and Functional Microgels in Microfluidic Devices. *Angew. Chem.,* 2007, vol. 119, 1851-1854
- **C. SERRA ; N. BERTON ; M. BOUQUEY ; L. PRAT ; G. HADZIIOANNOU.** A Predictive Approach of the Influence of the Operating Parameters on the Size of Polymer Particles Synthesized in a Simplified Microfluidic System. *Langmuir,* 2007, vol. 23, 7745-7750
- **HOUBEN-WEYL.** Methoden der organischen Chemie, Band XIV/1, Makromolekulare Stoffe. Georg- Thieme Verlag, 1961, vol. XIV/1, 192-208
- **HOUBEN-WEYL.** Methoden der Organischen Chemie, Bd. 14/1, Makromolekulare Stoffe. Georg-Thieme-Verlag, 1961, vol. 14/1, 411-420
- **R.Y. LOCHHEAD ; W.R. FRON.** *Cosmetics & Toiletries,* Mai 1993, vol. 108, 95-135

- Rheological Properties of Cosmetics and Toiletries. Cosmetic Science and Technology Series. Marcel Dekker Inc, vol. 13